(19) Europäisches Patentamt
European Patent Office
Office européen des brevets

(11) EP 0 791 017 B1

(12) EUROPEAN PATENT SPECIFICATION

(45) Date of publication and mention of the grant of the patent:
**21.06.2000 Bulletin 2000/25**

(21) Application number: **95939795.1**

(22) Date of filing: **08.11.1995**

(51) Int Cl.⁷: **C08F 2/38**, C08F 2/22

(86) International application number:
**PCT/US95/14429**

(87) International publication number:
**WO 96/15158 (23.05.1996 Gazette 1996/23)**

# (54) POLYMERIZATION IN AQUEOUS MEDIA

POLYMERISATION IN WÄSSRIGEN MEDIEN

POLYMERISATION EN MILIEU AQUEUX

(84) Designated Contracting States:
**BE DE FR GB**

(30) Priority: **09.11.1994 AU PM930494**

(43) Date of publication of application:
**27.08.1997 Bulletin 1997/35**

(73) Proprietors:
- **E.I. DU PONT DE NEMOURS AND COMPANY Wilmington Delaware 19898 (US)**
- **COMMONWEALTH SCIENTIFIC AND INDUSTRIAL RESEARCH ORGANISATION Parkville, VIC 3052 (AU)**

(72) Inventors:
- **MOAD, Graeme Kallista, VIC 3791 (AU)**
- **MOAD, Catherine, Louise Kallista, VIC 3791 (AU)**
- **KRSTINA, Julia Chelsea, VIC 3196 (AU)**
- **RIZZARDO, Ezio Wheelers Hill, VIC 3150 (AU)**
- **THANG, San, Hoa Clayton South, VIC 3169 (AU)**
- **FRYD, Michael Moorestown, NJ 08057-1910 (US)**

(74) Representative: **Woodcraft, David Charles et al**
**BROOKES & MARTIN**
**High Holborn House**
**52/54 High Holborn**
**London, WC1V 6SE (GB)**

(56) References cited:

| | |
|---|---|
| EP-A- 0 199 436 | EP-A- 0 261 942 |
| WO-A-95/04759 | WO-A-95/17435 |
| WO-A-95/27737 | WO-A-96/13527 |
| US-A- 4 526 945 | US-A- 4 680 354 |
| US-A- 5 324 879 | |

- **JOURNAL OF POLYMER SCIENCE: POLYMER CHEMISTRY EDITION, vol. 22, 1984 pages 3255-3262, A. F. BURCZYK 'COBALTOXIME AS A CATALYTIC CHAIN TRANSFER AGENT'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 791 017 B1

## Description

### FIELD OF INVENTION

This invention relates to free-radical polymerization in emulsion or in aqueous solution to produce polymers with defined molecular weight and end group structures and to certain cobalt complexes employed in the polymerization process.

### BACKGROUND ART

US 5,324,879 discloses the use of cobalt(III) complexes to control molecular weights in free radical polymerization. US 4,694,054 discloses the use of certain Co(II) complexes in emulsion polymerization.

WO 96/04759, WO 96/13527, WO 95/17435 and WO 95/27737, all published after the priority date of the present document, disclose the use of cobalt(II) complexes and their cobalt(III) analogues for molecular weight control in solution and suspension polymerizations.

### SUMMARY OF THE INVENTION

This invention provides a method for the solution or emulsion polymerization in aqueous media of at least one monomer selected from the group:

(a) 1,1-disubstituted ethylenically unsaturated monomer;
(b) styrene;
(c) a mixture of (a) and (b); and
(d) a mixture of at least one of (a) and (b) with one or more other free radical polymerizable monomers;

said monomer or monomer mixture comprising at least 50 percent by weight of monomer selected from at least one of (a) and (b);

comprising contacting the following materials:

(i) water or a single phase water-organic solvent mixture,
(ii) at least one monomer selected from (a) to (d),
(iii) an optional surfactant for emulsion polymerization;
(iv) an optional free-radical initiator soluble in the media;
(v) a cobalt (III) chelate chain transfer agent having the following properties:
(vi) hydrolytic stability, and
(vii) solubility in water and in the organic phase, with preferential solubility in the organic phase;

provided said chain transfer agent is not a cobalt (III) analogue of the cobalt (II) chelate molecular weight control compounds represented by the following formulae I, II, III, IV, V and VI, in which the Co atom is additionally covalently bonded to H, a halide or other anion, or a homolytically dissociable organic group:

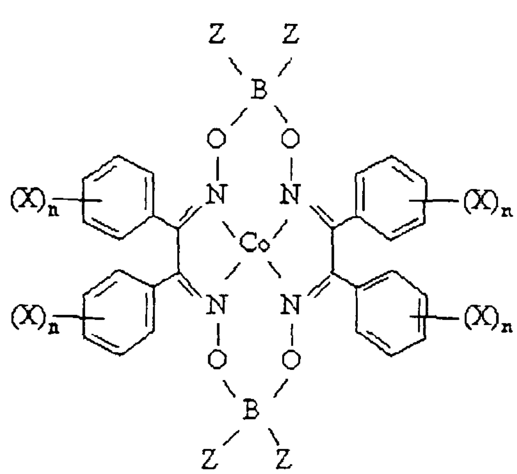

(I)

wherein

each X group, independently in each ring and in different rings, is a substituent selected from the group consisting of alkyl of 1 to 14 carbon atoms and cycloalkyl of 6 to 14 carbon atoms;
n, independently in each ring, is 0 to 5 provided that in at least one ring, n is 1 to 5;
Z, independently on each boron atom, is selected from the group consisting of F, Cl, Br, OH, alkoxy of 1 to 12 carbon atoms, aryloxy of 6 to 12 carbon atoms, alkyl of 1 to 12 carbon atoms and aryl of 6 to 12 carbon atoms; or two Z groups taken together provide on one or both boron atoms a group -O-(Q)-O- where Q is a divalent aryl or alicyclic linking group or an alkylene linking group, or two Z groups taken together on one or both boron atoms provide a 1,5-cyclooctanediyl linking group;

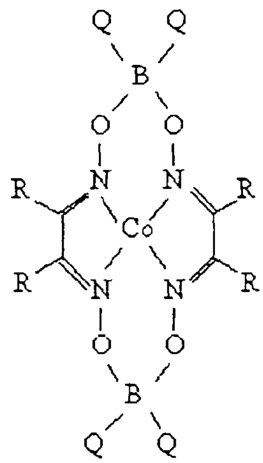

(II)

wherein each R group, independently, is a monovalent group having a cyclic structure or taken together as two adjacent groups provides a divalent group completing a cyclic structure with the adjacent carbon atoms, and wherein further at least one of the R groups includes at least one heteroatom selected from the group consisting of O, N, S, P, halogen and Si, said het oatom providing a substituent group or part of a substituent group on the cyclic structure, or a heteroatom of a heterocyclic ring of the cyclic structure; and wherein each group Q is independently selected from the group consisting of F, Cl, Br, OH, C1-12 alkoxy and C1-12 alkyl;

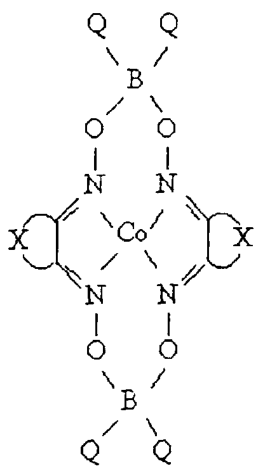

(III)

wherein each X group is a divalent group formed with the two carbon atoms to which it is bonded, a pericondensed polycyclic group having 3 or more carbocyclic rings where the oxime-containing carbocyclic ring has carbon atoms in common with 2 or more of the other rings, said polycyclic group being unsubstituted (apart from the oxime groups) or having at least one hydrocarbyl substituent; and wherein each Q group is independently selected from the group consisting of F, Cl, Br, OH, C1-12 alkoxy, aryloxy, C1-12 alkyl and aryl; or two Q groups taken together provide on one or both boron atoms a group -O-(G)-O- where G is a divalent aryl or alicyclic linking group or an alkylene linking group; or two Q groups taken together on one or both boron atoms provide a 1,5-cyclooctanediyl linking group;

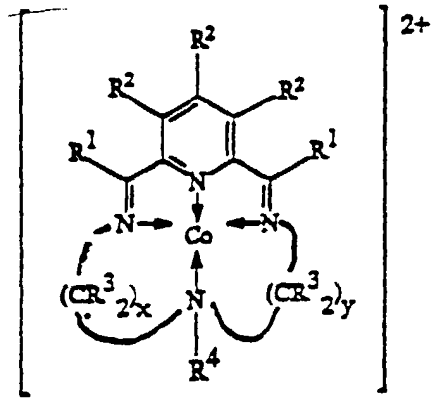

2b

(IV)

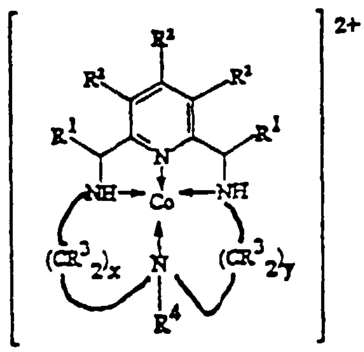

(V)

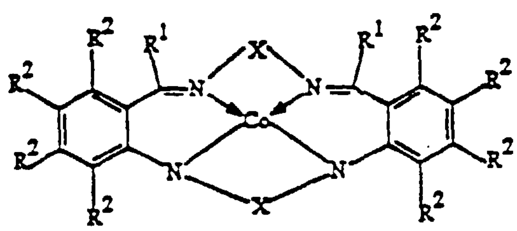

(VI)

wherein:

x and y are independently 2 to 5;

each $R^1$, $R^2$, $R^3$, and $R^4$ is independently selected from H, C1-C12 alkyl, optionally substituted aryl, $OR^5$ where $R^5$ is C1 to C12 alkyl or optionally substituted aryl, $CO_2R^5$, $SO_3H$, $C(=O)R^5$, $CO_2H$, $NO_2$, OH, $NR^5_2$, $NH_2$, $NHR^5$, $SR^5$, SH, CN, $SO_3R^5$, halogen, 2-furyl and 3-furyl;

each X is independently selected from $(SR^6_2)_n$, $(CR^6_2O)_n$, optionally substituted o-phenylene, and optionally substituted 1,8-naphthylene, where each $R^6$ is independently selected from H and C1 to C12 alkyl, and n is 1 to 10; and

wherein said cobalt chelates of formulae IV and V possess a positive charge of 2 and are associated with an anion or anions for balancing the positive charge, while that of formula VI is neutral.

The cobalt (III) chelates used in this invention have hydrolytic stability, and solubility in water and in the organic phase, with preferential solubility in the organic phase in the case of emulsion polymerization.

We have discovered that cobalt (III) complexes are most effective in controlling the molecular weights in emulsion polymerization or in aqueous solution. These complexes act as efficient catalytic chain transfer agents and produce polymers with unsaturated chain ends. The reaction conditions are extremely important in determining the success of the experiment and must be chosen with regard to the complex used.

This invention provides a process whereby free radical polymerization can be readily carried out in aqueous or part aqueous media to produce macromonomers. Such macromonomers are oligomeric or homo- or copolymers containing unsaturation at a terminus. The macromonomers are of low color and have a high degree of terminal unsaturation. The process of the invention utilizes free radical polymerization in the presence of a metal complex which gives catalytic chain transfer and which in addition has ligands necessary to convey the necessary hydrolytic stability and solubility parameters. Complexes suitable for emulsion polymerization have solubility in both the organic and aqueous phases and partition in favor of the organic phase. Complexes suitable for aqueous solution polymerisation are soluble in water-monomer or water-monomer-cosolvent mixtures.

A list of preferred complexes is shown below. Any cobalt(III) complex which gives catalytic chain transfer and which in addition has ligands necessary to convey the necessary hydrolytic stability and solubility parameters may be used in the present invention. Preferred complexes are those selected from square planar cobalt(III) chelates.

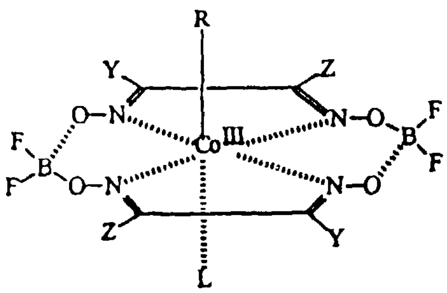

| | |
|---|---|
| $RCo(III)(DPG\text{-}BF_2)_2$ | Y=Z=Ph, R= alkyl, L=ligand |
| $RCo(III)(DMG\text{-}BF_2)_2$ | Y=Z=Me, R= alkyl, L=ligand |
| $RCo(III)(EMG\text{-}BF_2)_2$ | Y=Me, Z=Et, R= alkyl, L=ligand |
| $RCo(III)(DEG\text{-}BF_2)_2$ | Y=Z=Et, R= alkyl, L=ligand |
| $RCo(III)(CHG\text{-}BF_2)_2$ | Y+Z=$(CH_2)_4$- (cyclohexyl), R= alkyl, L=ligand |
| $RCo(III)(DMG\text{-}BF_2)_2$ | Y=Z=Me, R= halogen, L=ligand. |

The cobalt (III) complexes based on BF2-bridged 3,4-hexandione dioxime, 2,3-pentandione dioxime and 1,2-cyclohexanedione dioxime ligands are designed to give improved stability and/or solubility parameters.

It is preferable to use cobalt(III) complexes [for example, $iPrCo(III)(DMG\text{-}BF_2)_2$] which generate the active cobalt(II) species *in situ* under the reaction conditions. In the case of most alkyl cobalt (III) complexes this involves homolytic scission of the cobalt-R bond.

Other complexes that can be used include cobalt(III) complexes which are reduced to cobalt (II) complexes in a bimolecular process involving reaction with other species in the reaction medium [for example, $ClCo(III)(DMG\text{-}BF_2)_2$ or $MeCo(III)(DGE\text{-}Bf_2)_2$]. Cobalt(III) complexes which are not as readily converted to cobalt (II) complexes[for example $MeCo(III)(DMG\text{-}BF_2)_2$] are less effective in controlling molecular weight.

## DETAILS OF THE INVENTION

To achieve best control over molecular weight, the ligands (L) are selected to suit the reaction conditions (monomers, cosolvents, surfactant, reaction temperature, etc.). L is selected from Lewis bases including tertiary amines (such as pyridine), water, ether, phosphines, and the like, as will be obvious to one skilled in the art. For example, the cobalt(III) complexes, $iPrCo(III)(DMG\text{-}BF_2)_2$ or $MeCo(III)(DEG\text{-}BF_2)_2$] are compatible with hydroxy and acid monomers, giving good results.

The activity of the cobalt(III) complexes shows less dependence on surfactant type than is seen with cobalt (II) complexes. Depending on the reaction conditions cobalt(III) complexes are up to 3-20 fold more active than the corresponding cobalt(II) complexes in reducing molecular weight in emulsion polymerization. Although use of a surfactant (iv) may be desirable, such use is not necessary for self-stabilizing systems or systems otherwise stable such as by employment of block or graft copolymer stabilizers.

An important factor in controlling activity in emulsion polymerization is the solubility of the complex in aqueous

and organic media. The complex should be soluble in both the organic and aqueous phases and the partition coefficient between the aqueous and organic phases should be in favor of the organic phase. Complexes based on diethyl glyoxime [for example, iPrCo(III)(DEG-$BF_2$)$_2$] are more active than those based on dimethyl glyoxime [for example, iPrCo(III)(DMG-$BF_2$)$_2$].

However, some water solubility is required for the complex to distribute through the reaction mixture. The diphenyl glyoxime complexes [for example, Co(II)(DPG-$BF_2$)$_2$ and MeCo(III)(DPG-$BF_2$)$_2$] show much reduced activity with respect to corresponding dimethyl glyoxime complexes [for example Co(II)(DMG-$BF_2$)$_2$ and iPrCo(III)(DMG-$BF_2$)$_2$].

Higher complex concentrations are required for molecular weight control with very hydrophobic monomers, for example BMA or styrene. This result is most likely due to the lower solubility of the complex in the organic phase. Use of the term "styrene" herein is intended to include substituted styrenes as well.

Another important factor is the stability of the complex to hydrolysis. Incremental addition of the complex during the reaction improves molecular weight control especially in polymerizations of acid monomers (e.g. MAA) or with acidic reaction conditions. $BF_2$-bridging improves the hydrolytic stability of the complexes. The use of lower reaction temperatures is also advantageous.

Water soluble azo-compounds, for example 4,4'-azobis(cyanovaleric acid), are the preferred initiators for emulsion polymerization and for aqueous solution polymerization. Faster decomposing azo compounds, for example, WAKO V-44 [2,2'-azobis(N,N'-dimethyleneisobutyramidine)dihydrochloride], allow use of lower reaction temperatures (50-60°C) and are preferred for polymerizations involving methacrylic acid. Organic soluble azo-compounds can also be used for emulsion polymerization in some cases.

The preferred monomers for use with this invention are a-methylvinyl and styrenic monomers, mixtures of these monomers and mixtures of these monomers with other unsaturated monomers including acrylic monomers. The preferred a-methylvinyl monomers include: alkyl methacrylates (*e.g* MMA, EMA, *n*-BMA, *t*-BMA, 2-EHMA, PhMA.) substituted alkyl methacrylates (*e.g* HEMA, GMA, *etc.*), methacrylic acid (*e.g* MAA).

In emulsion polymerization, a wide range of surfactants and surfactant concentrations have been used in conjunction with cobalt(III) complexes. Both ionic and non-ionic surfactants may be employed. These surfactants include SDS, ADS, AerosolMA, Teric N40, Teric NX40L, alkanate, AerosolOT/Teric N40 and similar surfactants. These surfactants may be used alone or in combination.

$CH_3(CH_2)_{11}OSO_3^-\ Na^+$

SDS

$CH_3(CH_2)_{11}OSO_3^-\ Na_4^+$

ADS

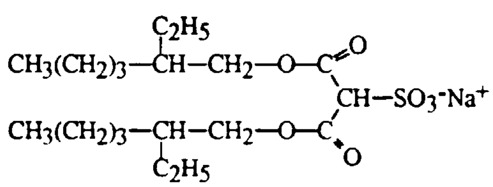

Aerosol OT

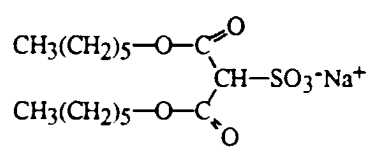

Aerosol MA80

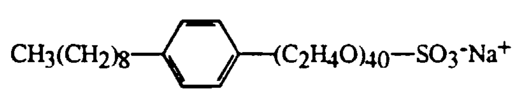

Teric 35N5 (Alkamte)

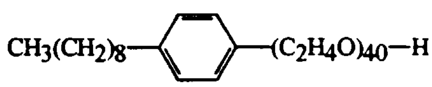

Teric N40

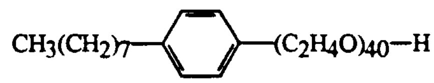

Teric NX40L

This invention will lead to polymers with a high degree of terminal unsaturation (typically in excess of 90%). Polymers formed with a-methyl vinyl monomers ($CH_2=C(CH_3)X$) will have the following end-group structure.

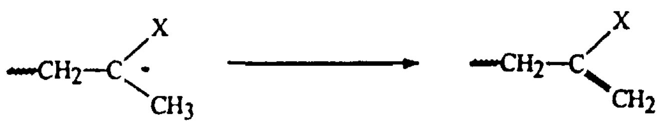

The products can thus be used as macromonomers in a wide variety of applications. The end group functionality of the low molecular weight methacrylate ester polymers formed by the processes described can be established quantitatively by NMR spectroscopy or by thermogravimetric analysis. Some typical results are as follows. Within experimental error, there is one unsaturated end group per molecule.

Table 1.

| End Group Functionality in Macromonomers | | | |
|---|---|---|---|
| Macromonomer | complex[a] | $\bar{M}n$[b] | end groups/molecule[c] |
| MMA | $iPrCo(III)(DMG-BF_2)_2$ | 1400 | 1.04 |
| MMA | $MeCo(III)(EMG-BF_2)_2$ | 2100 | 0.98 |
| MMA | $MeCo(III)(DEG-BF_2)_2$ | 2400 | 0.98 |
| HEMA | $iPrCo(III)(DMG-BF_2)_2$ | 810 | 0.97 |

[a] cobalt complex used in macromonomer synthesis
[b] GPC number average molecular weight.
[c] unsaturated chain end as estimated by NMR.

Some of general advantages of polymerisation in emulsion and aqueous solution polymerisation is organic solutions have been delineated above. A further unexpected and important advantage of forming macromonomers in aqueous or part-aqueous media is that the products have substantially less color than those formed in organic media. Color is extremely important in many applications, for example, clear and light colored coatings and other materials.

Illustrative of the invention are the following examples showing the dependence of molecular weight on the type of complex, surfactant and comonomers employed; application to copolymer synthesis; and aqueous solution polymerisation of methacrylic acid and 2-hydroxyethyl methacrylate.

| Key | |
|---|---|
| MMA | methyl methacrylate |
| HEMA | hydroxyethyl methacrylate |
| nBMA | n-butyl methacrylate |
| tBMA | t-butyl methacrylate |
| PhMA | phenyl methacrylate |
| 2-EHMA | 2-ethylhexyl methacrylate |
| MAA | methacrylic acid |

(continued)

| Key | |
|---|---|
| MAm | methacrylamide |
| GMA | glycidyl methacrylate |

**EXAMPLES 1-13**

Emulsion polymerization with cobalt (III) complexes (with surfactant feed)

| | | |
|---|---|---|
| Solution 1 | Water | 75 g |
| | Surfactant solution (10% w/v) | 3 g |
| | 4,4'-azobis(cyanovaleric acid) | 140 mg |
| Solution 2 | Surfactant solution (10% w/v) | 1 g |
| | $iPrCo(III)(DMG\text{-}BF_2)_2$ | 1.96 mg |
| | MMA | 3.5 g |
| Solution 3 | MMA | 31.2 g |
| Solution 4 | Surfactant solution (10% w/v) | 8 g |

Solution 1 was degassed over 20 minutes and heated to 80°C when solution 2 was added in one shot. The feeds (solution 3 and 4) were commenced and added over 90 min. The reaction temperature was then increased to 85°C and heating and stirring continued for a further 90 min. Results of this and similar experiments are summarized in Tables 3-5.

Table 3.

| Effect of Complex on Emulsion Polymerisation of MMA[a] | | | | | | |
|---|---|---|---|---|---|---|
| Example | Complex | conc ppm | $\overline{M}_n$ | $\overline{M}_w/\overline{M}_n$ | % Conv | % coagulum |
| | none | 0 | 181000 | 2.5 | 100 | - |
| 1 | $Co(II)(DMG\text{-}BF_2)_2$ | 14 | 29900 | 2.4 | 95 | 5 |
| 2 | $iPrCo(III)(DMG\text{-}BF_2)_2$ | 17 | 10000 | 2.2 | 100 | 4 |
| 3 | 2-octyl $Co(III)(DMG\text{-}BF_2)_2$ | 18 | 6200 | 1.7 | 34 | 4 |
| 4 | $iPrCo(III)(CHG\text{-}BF_2)_2$ | 16 | 18600 | 2.1 | 100 | 3 |
| 5 | $MeCo(III)(EMG\text{-}BF_2)_2$ | 16 | 6200 | 1.9 | 91 | 4 |
| 6 | $MeCo(III)(DEG\text{-}BF_2)_2$ | 16 | 3200 | 1.6 | 93 | 6 |
| 7 | $Co(II)(DPG\text{-}BF_2)_2$ | 22 | 119200 | 2.5 | 72 | 1 |
| 8 | $EtCo(III)(DPG\text{-}BF_2)_2$ | 24 | 30600 | 1.9 | 92 | 5 |

[a] 1% (w/v) SDS surfactant

Table 4.

| Effect of Surfactant on Emulsion Polymerization of MMA[a] | | | | | | |
|---|---|---|---|---|---|---|
| Example | Surfactant | wt%[b] | $\overline{M}_n$ | $\overline{M}_w/\overline{M}_n$ | % Conv.[d] | % coagulum |
| 9 | SDS | 0.1 | 14200 | 2.5 | 100 | 11 |
| 10 | SDS | 0.5 | 10600 | 3.2 | 92 | 4 |
| 11 | SDS | 1.0 | 10000 | 2.1 | 100 | 4 |
| 12 | SDS | 3.0 | 8100 | 1.9 | 100 | 14 |
| 13 | ADS | 1.0 | 16000 | 2.2 | 62 | 2 |
| 14 | Aerosol MA80 | 1.0 | 13100 | 2.0 | 80 | 13 |
| 15 | SDS/Teric N40 | 0.1 | 11200 | 2.9 | 100 | 6 |
| 16 | SDS/Teric NX40L | 0.1 | 12300 | 2.5 | 100 | 17 |
| 17 | alkanate | 0.1 | 21000 | 2.0 | 88 | 13 |
| 18 | AerosolOT/Teric N40 | 0.1 | 12700 | 2.0 | 92 | 16 |
| 19 | AerosolOT/Teric NX40L | 0.1 | 29800 | 2.2 | 91 | 12 |

[a] $iPrCo(III)(DMG\text{-}BF_2)_2$ concentration 19 ppm.
[b] Surfactant level

Table 5.

| Effect of Comonomers on Emulsion Polymerization of MMA | | | | | |
|---|---|---|---|---|---|
| Example | Comonomers | ratio | $\overline{M}n$ | $\overline{M}w/\overline{M}n$ | % Conv |
| | none[a] | - | 10000 | - | 100 |
| 20 | HEMA[a,c] | 8:1 | 10600 | 2.0 | 75 |
| 21 | HEmA[b,c] | 8:1 | 19000 | 3.0 | |
| 22 | MAA[b] | 8:1 | 17600 | 2.6 | 90 |
| 23 | *n*.BMA:2-EHMA:MAA:HEMA:MAm[3] | d | 8500 | 2.2 | 90 |

[a] 1% (w/v) SDS surfactant, $iPrCo(III)(DMG\text{-}BF_2)_2$ concentration 17 ppm.
[b] 1% (w/v) SDS surfactant, $iPrCo(III)(CHG\text{-}BF_2)_2$ concentration 17 ppm.
[c] control (no complex) gave $\overline{M}_n$ 119500, $\overline{M}_w/\overline{M}_n$ 6.9.
[d] ratio of monomers was 10:1:1:20:1

**EXAMPLES 24-39**

| Emulsion polymerisation recipe (no surfactant feed) | | |
|---|---|---|
| Initial Charge: | | |
| Solution 1 | Water | 75 g |
| | SDS solution (10% w/v) | 3 g |
| | 4,4'-azobis(cyanovaleric acid) | 140 mg |
| Solution 2 | $iPrco(III)(DMG\text{-}BF_2)_2$ | 2 mg |
| | MMA | 3.5 g |
| Feed | MMA | 31.7 g |

Water was degassed over 20 minutes and heated to 80°C when solution 2 was added in one shot. The MMA feed was then added over 90 min. The reaction temperature was then increased to 85°C and heating and stirring continued for a further 90 min. Results are summarized in Tables 6 and 7.

Table 6.

| Emulsion Polymerisations of MMA - dialkylglyoxime based complexes[a] | | | | | |
|---|---|---|---|---|---|
| Example | Complex | conc. ppm | $\overline{M}_n$ | $\overline{M}_w/\overline{M}_n$ | % Conv. |
| 24 | $iPrCo(III)(DMG\text{-}BF_2)_2$ | 19 | 13400 | 3.68 | 100 |
| 25 | | 190 | 1400 | 3.03 | 83 |
| 26 | $MeCo(III)(EMG\text{-}BF_2)_2$ | 19 | 4300 | 1.87 | 100 |
| 27 | | 45[b] | 2100 | 1.69 | 94 |
| 28 | $MeCo(III)(DEG\text{-}BF_2)_2$ | 19 | 2900 | 1.58 | 69 |
| 29 | | 57 | 920 | 1.65 | 51 |
| 30 | | 49[b] | 730 | 1.70 | 82 |
| 31 | | 48[b] | 900 | 1.78 | 90 |
| 32 | $MeCo(III)(DMG\text{-}BF_2)_2$ | 46[b] | 13700 | 2.65 | 100 |
| 33 | | | 14700 | 2.55 | 100 |

[a] 1% (w/v) SDS surfactant.
[b] 30% of total complex added in MMA feed.

Table 7.

| Emulsion Polymerisation of Other Monomers[a] | | | | | | |
|---|---|---|---|---|---|---|
| Example | Monomer | Complex | conc. ppm | $\overline{M}_n$ | $\overline{M}_w/\overline{M}_n$ | % Conv |
| 34 | n-BMA | $iPrCo(III)(DMG\text{-}BF_2)_2$ | 48 | 9800 | 1.8 | 98 |
| 35 | n-BMA | $MeCo(III)(DEG\text{-}BF_2)_2$ | 48 | 5200 | 2.5 | 97 |
| 36 | n-BMA | $MeCo(III)(EMG\text{-}BF_2)_2$ | 48 | 9400 | 2.5 | 100 |
| 37 | t-BMA | $MeCo(III)(DEG\text{-}BF_2)_2$ | 43 | 3700 | 2.0 | 100 |
| 38 | PhMA | $MeCo(III)(DEG\text{-}BF_2)_2$ | 43 | 18000 | 2.3 | 100 |
| 39 | GMA | $iPrCo(III)(DMG\text{-}BF_2)_2$ | 109 | 3500 | 1.8 | 90 |

[a] 30% of complex added with monomer feed, 1% (w/v) SDS surfactant.

**EXAMPLES 40-41**

| Preparation of Styrene | |
|---|---|
| Initial Charge: | |
| distilled water | 75.03 g |
| Initiator (azobiscyanopentanoic acid) | 0.1440 g |
| Surfactant (10% aq. soln of sodium dodecyl sulfate) | 3.14 g |
| Styrene | 3.59 g |
| $MeCo(III)(DEG\text{-}BF_2)_2$ | 0.0031 g |
| Acetone | 0.5 mL |
| (Complex was dissolved in acetone) | |
| Feed 1 (180 min @ 0.200 mL/min) | |
| Styrene | 33.01 g |
| $MeCo(III)(DEG\text{-}BF_2)_2$ | 0.0121 g |
| Acetone | 1.0 mL |
| (Complex was dissolved in acetone) | |
| Feed 2 (90 min @. 0.089 mL/min) | |
| Initiator (azobiscyanopcntanoic acid) | 0.0690 g |

(continued)

| Preparation of Styrene | |
|---|---|
| Initial Charge: | |
| (Complex was dissolved in acetone) | |
| Feed 2 (90 min @. 0.089 mL/min) | |
| Surfactant (10% aq. soln of SDS) | 8.12 g |

(This solution was prepared by gently warming to 60°C)

Water was charged to a 5 neck, 250 mL reactor fitted with stirrer (400 rpm), condenser and thermocouple under a blanket of nitrogen. Initiator and surfactant were added to the reactor as single shots and heated to 80°C. When the reactor reached 80°C, the cobalt and styrene were added as single shots and Feed 1 commenced over 180 min. Some of the cobalt precipitated out of the monomer feed. Feed 2 (containing initiator/surfactant) was started 30 min after the start of polymerisation. The reactor was maintained at 80°C for 90 min after the completion of the monomer feed, then cooled. The reactor was sampled at 30 min intervals to monitor molecular weight and conversion .

Yield: 105.3 g stable white latex + small amount (< 0.2 g) yellow coagulum

Table 8.

| **Emulsion Polymerization of Styrene** | | | | | | |
|---|---|---|---|---|---|---|
| Example | Monomer | Complex | conc. ppm | $\bar{M}_n$ | $\bar{M}_w/\bar{M}_n$ | % Conv |
| | Styrene | none (control) | - | 130500 | 2.7 | 93 |
| 40 | Styrene | $MeCo(III)(DEG\text{-}BF_2)_2$ | 127 | 44000 | 3.2 | 94 |
| 41 | Styrene | $MeCo(III)(DMG\text{-}BF_2)_2$ | 127 | 48000 | 4.8 | 97 |

**EXAMPLE 42**

| Preparation of 60:40 MAA/MMA Macromonomer | | |
|---|---|---|
| Initial Charge: | Deionised Water | 150 g |
| Solution 1 | Antrox CA897 | 0.6 g |
| | Antrox CO436 | 0.3 g |
| | Initiator WAKO V-44 | 0.4 g |
| | $iPrCo(III)(DMG\text{-}BF_2)_2$ | 8 mg |
| | MMA | 4 g |
| Solution 2: | $iPrCo(III)(DMG\text{-}BF_2)_2$ | 16 mg |
| | MMA | 44.8 g |
| Solution 3: | MAA | 28.0 g |

Water (150 mL) was degassed for 20 minutes with a nitrogen purge and heated to 58°C. Solution 1 was added in one shot. The feeds (solutions 2 and 3) were then added over 60 minutes That rate of feed two was such that 5g was added over the first 20 min, 10g over the second 20 min, and the remainder over the third 20 min. The reaction was held at 58°C for 30 minutes then heated to 65°C for 1 hour and cooled. Conversion >95%, GPC molecular weight $\bar{M}_n$ 920, $\bar{M}_w/\bar{M}_n$ 1.6.

**EXAMPLES 43-48**

| Preparation of BMA/HEMA/MAA/MMA copolymer | | |
|---|---|---|
| Initial Charge | Water | 75 g |
| | SDS (10% solution) | 3 g |
| | 4,4'-azobis(cyanovaleric acid) | 141 mg |
| Solution 1 | $MeCo(III)(EMG-BF_2)_2$ | 3.00 mg |
| | MMA | 0.098 g |
| | MAA | 0.62 g |
| | BMA | 2.13 g |
| | HEMA | 1.48 g |
| Solution 2 | MMA | 0.562 g |
| | BMA | 12.02 g |
| | $MECo(III)(EMG-BF_2)_2$ | 2.00 mg |
| Solution 3 | MAA | 7.76 g |
| | HEMA | 8.45 g |

The initial charge was degassed for 30 minutes with a nitrogen purge and heated to 80°C with a preheated water bath. Solution 1 was added in one shot. Solutions 2 and 3 were then added simultaneously over 90 min. On completion of the feeds, the temperature was increased to 85°C and held for 90 min The results of this and similar experiments are summarized in Table 9.

Table 9.

| **Emulsion Copolymerization of MMA/MAA/BMA/HEMA** | | | | | | |
|---|---|---|---|---|---|---|
| Example | Complex | ppm | $\overline{M}_n$ | $\overline{M}_w$ | $\overline{M}_w/\overline{M}_n$ | Conv. |
| 43 | $iPrCo(III)(DMG-BF_2)_2$ | 130[a] | 5900 | 17600 | 2.97 | 100 % |
| 44 | $iPrCo(III)(DMG-BF_2)_2$ | 80[b] | 2900 | 3700 | 1.29 | 100 % |
| 45 | $MeCo(III)(EMG-BF_2)_2$ | 110[b] | 4000 | 11400 | 2.85 | 96 % |
| 46 | $MeCo(III)(EMG-BF_2)_2$ | 50[a] | 4900 | 12600 | 2.53 | 100 % |
| 47 | $MeCo(III)(DEG-BF_2)_2$ | 111[b] | 830 | 1500 | 1.74 | 96% |
| 48 | $MeCo(III)(DEG-BF_2)_2$ | 80[a] | 2300 | 3200 | 1.44 | 100 % |

[a] All complex in solution 1.
[b] 40% of total complex added with Feed 1.

**EXAMPLES 49-52**

| Preparation of GMA-MMA macromonomer | |
|---|---|
| Initial charge: | |
| distilled water<br>SLS (3% solution) | 75 g<br>5 g |
| Solution 1: | |
| 4,4'-azobis(cyanovaleric acid) 140 mg<br>GMA | <br>2.6 g |

(continued)

| Preparation of GMA-MMA macromonomer | |
|---|---|
| Initial charge: | |
| Solution 1: | |
| MMA<br>$MeCo(III)(DEG-BF_2)_2$ | 1.0 g<br>8.9 mg |
| Feed: | |
| GMA<br>MMA<br>$MeCo(III)(DEG-BF_2)_2$ | 18 g<br>13.5 g<br>7.9 mg |

The water-SLS mixture was vacuum degassed for 30 minutes and placed 5-neck, reactor fitted with a stirrer, condenser and a thermocouple under a blanket of nitrogen and heated to 80°C. Solution 1 was then added and the Feed commenced immediately and added over 90 minutes. The reactor was maintained at 80°C for a further 90 minutes. Conversion based on % solids was >90%.

Table 10.

| Emulsion Copolymerization of MMA and GMA | | | | |
|---|---|---|---|---|
| Example | Complex | ppm | $\bar{M}_n$ | $\bar{M}_w/\bar{M}_n$ |
| 49 | $iPrCo(III)(DMG-BF_2)_2$[a] | 213 | 790 | 2.04 |
| 50 | $iPrCo(III)(DMG-BF_2)_2$[a] | 135 | 2900 | 1.51 |
| 51 | $iPrCo(III)(DMG-BF_2)_2$ | 100 | 3620 | 2.13 |
| 52 | $MeCo(III)(DEG-BF_2)_2$ | 146 | 1460 | 1.55 |

[a] Latex unstable

**EXAMPLE 53**

| Aqueous Solution polymerization of MAA | |
|---|---|
| Initial Charge: | |
| distilled water<br>Initiator (WAKO VA-044)<br>water<br>$iPrCo(III)(DMG-BF_2)_2$<br>acetone | 150 g<br>0.3 g<br>2 mL<br>13 mg<br>2 mL |
| Feed: | |
| methacrylic acid<br>$iPrCo(III)(DMG-BF_2)_2$ | 74 g<br>7.5 mg |

Water (150 mL) was charged to a 5 neck, 500 mL reactor fitted with stirrer (300 rpm), condenser and thermocouple under a blanket of nitrogen and heated to 55°C. Initiator (0.3 g dissolved in 2 mL water) and $iPrCo(III)(DMG-BF_2)_2$ (13 mg dissolved in 2 mL acetone) were added to the reactor as single shots. The feed of MAA containing the remaining $iPrCo(III)(DMG-BF_2)_2$) was commenced immediately (1.23 mL/min over 60 min). The reactor was maintained at 55°C for 30.min after the completion of the feed, then cooled. The methacrylic acid macromonomer was isolated by evaporation of the water

Conversion: approx. 90%, NMR analysis indicates number average molecular weight of about 1000.

**EXAMPLES 54-61**

Aqueous Solution polymerization of HEMA

The color of the product is dramatically lighter than similar macromonomers prepared in organic solvents (e. g., isopropanol). Complex activity is also higher.

| Initial Charge: | |
|---|---|
| distilled water<br>methanol | 52 g<br>23 g |
| Solution 1: | |
| 4,4'-azobis(cyanovaleric acid)<br>iPrCo(III)(DMG-$BF_2$)$_2$ | 140 g<br>10 mg in 3.5 g HEMA |
| Solution 2: | |
| HEMA<br>iPrCo(III)(DMG-$BF_2$)$_2$ | 31.7 g<br>7 mg |

The water-methanol mixture was charged to a 5 neck, 500 mL reactor fitted with stirrer (300 rpm), condenser and thermocouple under a blanket of nitrogen and heated to 80°C. The initiator (0.14 g dissolved in 3.5 mL HEMA) and iPrCo(III)(DMG-$BF_2$)$_2$ were added to the reactor as a single shot. The feed of HEMA containing the remaining iPrCo(III)(DMG-$BF_2$)$_2$) was commenced immediatelyand added over 90 min. The reactor was maintained at 80°C for 150 min after the completion of the feed. Further aliquots of the initiator (70 mg) were added at 1 hourly intervals. The results of these experiments are sumarized in Table 11.

Table 11.

| **Aqueous Solution Polymerization of HEMA** | | | | | | | |
|---|---|---|---|---|---|---|---|
| Example | Complex | % solids | ppm | solvent | $\bar{M}_n$[a] | % conv | Colour |
| 54 | MeCo(III)(DEG-$BF_2$)$_2$ | 30 | 56[a] | water | 3180 | 93 | cloudy yellow |
| 55 | iPrCo(III)(DMG-$BF_2$)$_2$ | 30 | 56[a] | water | 1470 | 87 | pale yellow |
| 56 | iPrCo(III)(DMG-$BF_2$)$_2$ | 30 | 171[a] | water | 990 | 68 | pale yellow |
| 57 | iPrCo(III)(DMG-$BF_2$)$_2$ | 40 | 343 | water | 530 | 72 | pale orange |
| 58 | iPrCo(III)(DMG-$BF_2$)$_2$ | 50 | 400 | water | 490 | 72 | pale orange |
| 59 | iPrCo(III)(DMG-$BF_2$)$_2$ | 30 | 160 | 70:30 water - isopropanol | 590 | 30 | brown |
| 60 | iPrCo(III)(DMG-$BF_2$)$_2$ | 30 | 105 | 70:30 water - methanol | 1610 | 98 | pale yellow |
| 61 | iPrCo(III)(DMG-$BF_2$)$_2$ | 30 | 162 | 70:30 water - methanol | 810 | 68 | pale yellow |

[a] number average molecular weight estimated by NMR determination of the unsaturate end groups

GENERAL PROCEDURE FOR PREPARATION OF COBALT(III) CATALYSTS

Preparation of [bis[m-[(2,3-hexanedione dioximato)(2-)-O:O']] tetrafluorodiborato (2-)-N,N',N",N'"] (methyl) (aqua) cobalt

Cobalt(III) complexes of the invention and all such complexes useful in the disclosed process are made by

appropriate compound substitutions in the procedure described in Paragraph A hereafter. One skilled in the art will have no difficulty, given the disclosure that has been provided, in making all such complexes and in pairing the appropriate Lewis base(s) and cobalt-containing moieties to obtain the claimed cobalt complexes and to obtain the fruits of the claimed process.

**A. Preparation of Methyl pyridinato-Co(III)-DEG**

| | | | |
|---|---|---|---|
| | Methanol | 50 | mL |
| | 3,4-hexanedione dioxime | 3.0 | g |
| | $CoCl_2.6H_2O$ | 2.0171 | g |
| Solution 1 | Sodium hydroxide | 0.819 | g |
| | Water | 0.819 | g |
| | Pyridine | 0.670 | mL |
| Solution 2 | Sodium hydroxide | 0.532 | g |
| | Water | 0.532 | g |
| | Sodium borohydride | 0.365 | g |
| | Methyl bromide | 0.590 | mL |

The methanol was degassed under nitrogen for 20 minutes at room temperature and the $CoCl_2.6H_2O$ and the 3,4-hexanedione dioxime were added. After ten minutes the Solution 1 was added, followed by slow addition of pyridine. The reaction mixture was cooled to -20°C and stirring under nitrogen was continued for 20 minutes. The second sodium hydroxide solution and the sodium borohydride were added slowly. Methyl bromide was added dropwise over 20 minutes and the reaction mixture was allowed to reach room temperature. Half of the solvent was removed by evaporation and 40 mL of cold water was added. The compound was filtered and washed with a pyridine-water (5%) solution, and dried over $P_2O_5$.

**B: Preparation of Methyl pyridinato-Co(III)-DEG $BF_2$ Bridged.**

| | | |
|---|---|---|
| Methyl pyridinato-Co(III)-DEG | 3.551 | g |
| $BF_3Et_2O$ | 9.217 | g |
| Ether | 5 | mL |

The boron triethyletherate and ether were cooled under nitrogen at -20°C for 40 minutes. The methyl pyridinato-Co(III)-DEG was added over 20 minutes. The reaction was allowed to reach room temperature, then the compound was isolated by filtration and washed with ether.

**C: Preparation of Methyl aqua-Co(III)-DEG $BF_2$ Bridged.**

| | | |
|---|---|---|
| Methyl pyridinato-Co(III)-DEG $BF_2$ bridged | 3.178 | g |
| Water | 30 | mL |

The water was degassed under nitrogen at 30°C for 10 minutes. The methyl pyridinato-Co(III)-(DEG $BF_2$ Bridged complex was added and the solution held at 30°C for 40 minutes. The solution was allowed to reach room temperature and the compound was isolated by filtration, and washed with water.

## Claims

1. A method for the solution or emulsion polymerization in aqueous media of at least one monomer selected from the group:

   (a) 1,1-disubstituted ethylenically unsaturated monomer;
   (b) styrene;
   (c) a mixture of (a) and (b); and
   (d) a mixture of at least one of (a) and (b) with one or more other free radical polymerizable monomers;

   said monomer or monomer mixture comprising at least 50 percent by weight of monomer selected from at least one of (a) and (b);
   comprising contacting the following materials:

   (i) water or a single phase water-organic solvent mixture,
   (ii) at least one monomer selected from (a) to (d),
   (iii) an optional surfactant for emulsion polymerization;
   (iv) an optional free-radical initiator soluble in the media;
   (v) a cobalt (III) chelate chain transfer agent having the following properties:
   (vi) hydrolytic stability, and
   (vii) solubility in water and in the organic phase, with preferential solubility in the organic phase;

   provided said chain transfer agent is not a cobalt (III) analogue of the cobalt (II) chelate molecular weight control compounds represented by the following formulae I, II, III, IV, V and VI, in which the Co atom is additionally covalently bonded to H, a halide or other anion, or a homolytically dissociable organic group:

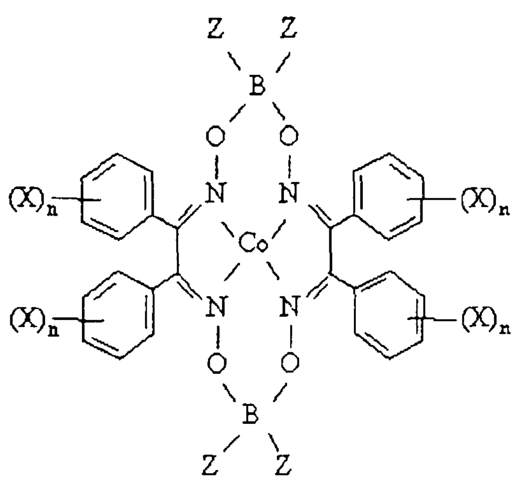

(I)

   wherein each X group, independently in each ring and in different rings, is a substituent selected from the group consisting of alkyl of 1 to 14 carbon atoms and cycloalkyl of 6 to 14 carbon atoms;
   n, independently in each ring, is 0 to 5 provided that in at least one ring, n is 1 to 5;
   Z, independently on each boron atom, is selected from the group consisting of F, Cl, Br, OH, alkoxy of 1 to 12 carbon atoms, aryloxy of 6 to 12 carbon atoms, alkyl of 1 to 12 carbon atoms and aryl of 6 to 12 carbon atoms; or two Z groups taken together provide on one or both boron atoms a group -O-(Q)-O- where Q is a divalent aryl or alicyclic linking group or an alkylene linking group, or two Z groups taken together on one or both boron atoms provide a 1,5-cyclooctanediyl linking group;

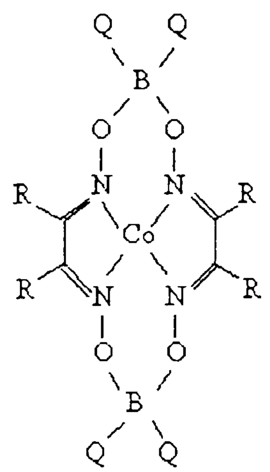

(II)

wherein each R group, independently, is a monovalent group having a cyclic structure or taken together as two adjacent groups provides a divalent group completing a cyclic structure with the adjacent carbon atoms, and wherein further at least one of the R groups includes at least one heteroatom selected from the group consisting of O, N, S, P, halogen and Si, said het oatom providing a substituent group or part of a substituent group on the cyclic structure, or a heteroatom of a heterocyclic ring of the cyclic structure; and wherein each group Q is independently selected from the group consisting of F, Cl, Br, OH, C1-12 alkoxy and C1-12 alkyl;

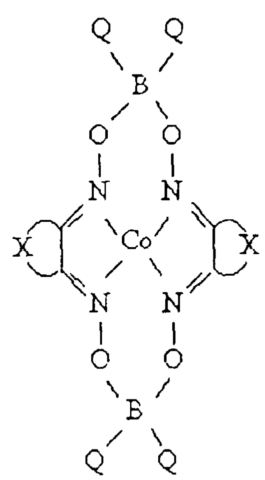

(III)

wherein each X group is a divalent group formed with the two carbon atoms to which it is bonded, a pericondensed polycyclic group having 3 or more carbocyclic rings where the oxime-containing carbocyclic ring has carbon atoms in common with 2 or more of the other rings, said polycyclic group being unsubstituted (apart from the oxime groups) or having at least one hydrocarbyl substituent; and wherein each Q group is independently selected from the group consisting of F, Cl, Br, OH, C1-12 alkoxy, aryloxy, C1-12 alkyl and aryl; or two Q groups taken together provide on one or both boron atoms a group -O-(G)-O- where G is a divalent aryl or alicyclic linking group or an alkylene linking group; or two Q groups taken together on one or both boron atoms provide a 1,5-cyclooctanediyl linking group;

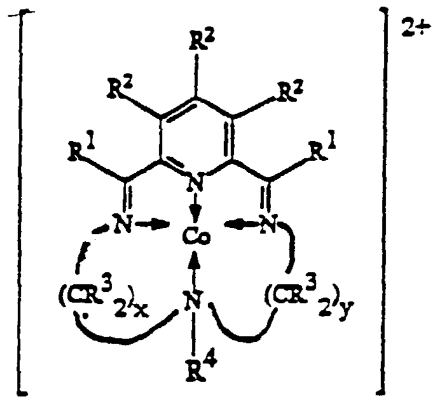

(IV)

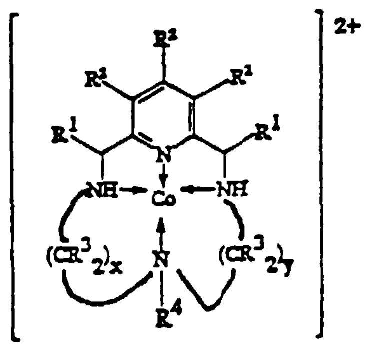

(V)

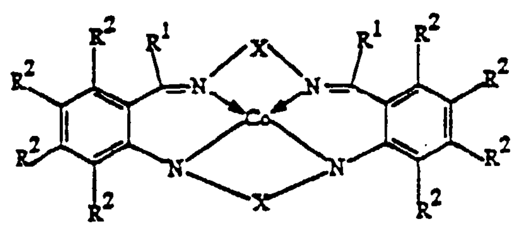

(VI)

wherein:

x and y are independently 2 to 5;

each $R^1$, $R^2$, $R^3$, and $R^4$ is independently selected from H, C1-C12 alkyl, optionally substituted aryl, $OR^5$ where $R^5$ is C1 to C12 alkyl or optionally substituted aryl, $CO_2R^5$, $SO_3H$, $C(=O)R^5$, $CO_2H$, $NO_2$, OH, $NR^5_2$, $NH_2$, $NHR^5$, $SR^5$, SH, CN, $SO_3R^5$, halogen, 2-furyl and 3-furyl;

each X is independently selected from $(SR^6_2)_n$, $(CR^6_2O)_n$, optionally substituted o-phenylene, and optionally substituted 1,8-naphthylene, where each $R^6$ is independently selected from H and Cl to C12 alkyl, and n is 1 to 10; and

wherein said cobalt chelates of formulae IV and V possess a positive charge of 2 and are associated with an anion or anions for balancing the positive charge, while that of formula VI is neutral.

**2.** A method according to claim 1 comprising emulsion polymerization.

**3.** A method according to claim 1 comprising solution polymerization in water or a single phase mixture of water and organic solvent.

**4.** A method according to any one of claims 1 to 3 in which the cobalt chelate chain transfer agent selected from at

least one member of the group

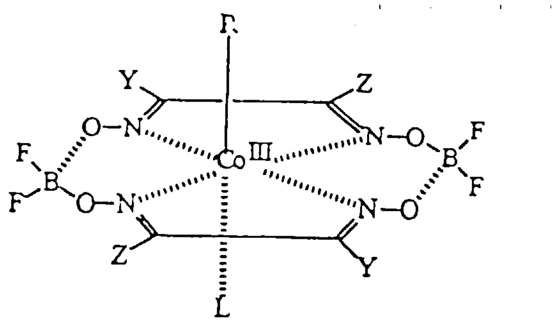

| | |
|---|---|
| $RCo(III)(DPG\text{-}BF_2)_2$ | Y=Z=Ph, R= alkyl, L=Lewis base |
| $RCo(III)(DMG\text{-}BF_2)_2$ | Y=Z=Me, R= alkyl, L=Lewis base |
| $RCi(III)(EMG\text{-}BF_2)_2$ | Y=Me, Z=Et, R=alkyl, L=Lewis base |
| $RCo(III)(DEG\text{-}BF_2)_2$ | Y=Z=Et, R= alkyl, L=Lewis base |
| $RCo(III)(CHG\text{-}BF_2)_2$ | Y+Z=-$(CH_2)_4$-, R= alkyl, L=Lewis base and |
| $RCo(III)(DMG\text{-}BF_2)_2$ | Y=Z=Me, R=halogen, L=Lewis base. |

**5.** A method according to Claim 4 wherein the cobalt chelate chain transfer agent is alkylCo(III) (dimethyl glyoxime-$BF_2)_2$ or alkylCo(III) (diethyl glyoxime-$BF_2)_2$.

**6.** A method according to Claim 5 wherein the alkyl is isopropyl.

**7.** A cobalt chelate chain transfer agent selected from the group:

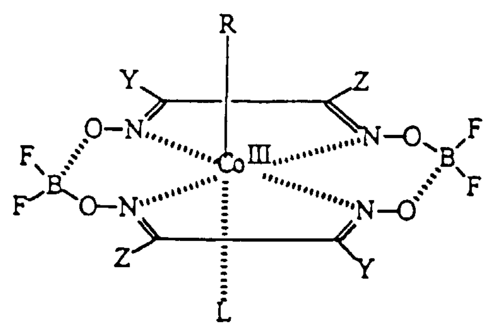

comprising:

| | |
|---|---|
| $RCo(III)(EMG\text{-}BF_2)_2$ | Y=Me, Z=Et, R=alkyl, L=Lewis base; |
| $RCo(III)(DEG\text{-}BF_2)_2$ | Y=Z=Et, R=alkyl, L=Lewis base; and |
| $RCo(III)(CHG\text{-}BF_2)_2$ | Y+Z=$(CH_2)_4$-, R=alkyl, L=Lewis base. |

**Patentansprüche**

**1.** Verfahren für die Lösungs- oder Emulsionspolymerisation in wäßrigen Medien von mindestens einem Monomer, das ausgewählt ist aus der Gruppe bestehend aus:

(a) 1,1-disubstituiertem, ethylenisch ungesättigtem Monomer;
(b) Styrol;
(c) einer Mischung aus (a) und (b) und
(d) einer Mischung aus mindestens einem von (a) und (b) mit einem oder mehreren anderen, durch freie Radikale polymerisierbaren Monomeren;

wobei das Monomer oder die Monomermischung mindestens 50 Gew.-% Monomer aufweist, das aus mindestens einem von (a) und (b) ausgewählt ist;
umfassend das in Kontakt Bringen mindestens eines der folgenden Materialien:

(i) Wasser oder einer Einphasen-Mischung aus Wasser und organischem Lösungsmittel,
(ii) mindestens eines Monomers, das aus (a) bis (d) ausgewählt ist,
(iii) eines optionalen Tensids für die Emulsionspolymerisation;
(iv) eines optionalen freien Radikal-Initiators, der in dem Medium löslich ist;
(v) eines Kobalt(III)-Chelat-Kettentransfermittels mit den folgenden Eigenschaften:
(vi) Hydrolysebeständigkeit und
(vii)Löslichkeit in Wasser und in der organischen Phase, mit bevorzugter Löslichkeit in der organischen Phase;

mit der Maßgabe, daß das Kettenübertragungsmittel kein Kobalt(III)-Analogon der Kobalt(II)-Chelat-Steuerungsverbindungen für das Molekulargewicht ist, die durch die folgenden Formeln I, II, III, IV, V und VI dargestellt werden, in denen das Co-Atom zusätzlich kovalent an H, ein Halogenid oder ein anderes Anion oder an eine homolytisch dissoziierbare organische Gruppe gebunden ist:

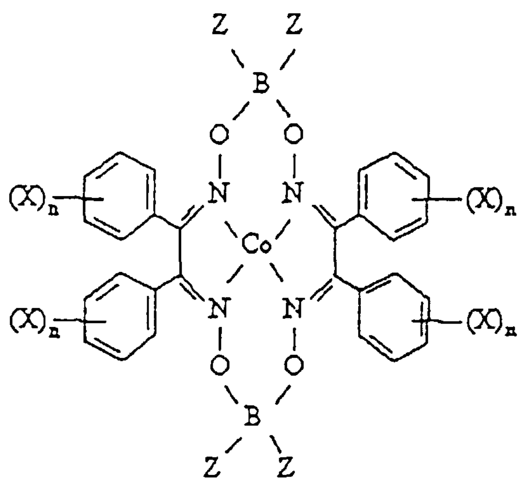

(I)

worin jede X-Gruppe, unabhängig in jedem Ring und in unterschiedlichen Ringen, ein Substituent ist, der aus der Gruppe ausgewählt ist bestehend aus Alkyl mit 1 bis 14 Kohlenstoffatomen und Cycloalkyl mit 6 bis 14 Kohlenstoffatomen;
n, unabhängig in jedem Ring, 0 bis 5 ist, mit der Maßgabe, daß in mindestens einem Ring n 1 bis 5 ist;
Z, unabhängig auf jedem Boratom, ausgewählt ist aus der Gruppe bestehend aus F, Cl, Br, OH, Alkoxy mit 1 bis 12 Kohlenstoffatomen, Aryloxy mit 6 bis 12 Kohlenstoffatomen, Alkyl mit 1 bis 12 Kohlenstoffatomen und Aryl mit 6 bis 12 Kohlenstoffatomen;
oder zwei Z-Gruppen zusammengenommen an einem oder beiden Boratomen eine -O-(Q)-O-Gruppe bereitstellen, in der Q eine zweiwertige Aryl- oder alicyclische Verknüpfungsgruppe oder eine Alkylenverknüpfungsgruppe ist, oder zwei Z-Gruppen zusammengenommen an einem oder beiden Boratomen eine 1,5-Cyclooctandiyl- Verknüpfungsgruppe bereitstellen;

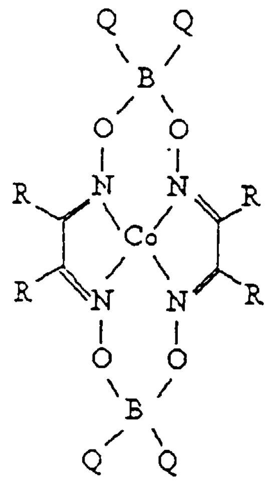

(II)

worin jede R-Gruppe unabhängig eine einwertige Gruppe ist, die eine ringförmige Struktur aufweist, oder als zwei benachbarte Gruppen zusammen genommen eine zweiwertige Gruppe bereitstellt, die eine ringförmige Struktur mit den benachbarten Kohlenstoffatomen bildet, und worin weiterhin mindestens eine der R-Gruppen mindestens ein Heteroatom einschließt, das aus der Gruppe ausgewählt ist, bestehend aus O, N, S, P, Halogen und Si, wobei das Heteroatom eine Substituentengruppe oder einen Teil einer Substituentengruppe der Ringstruktur oder ein Heteroatom eines heterocyclischen Rings der Ringstruktur bereitstellt; und worin jede Q-Gruppe unabhängig ausgewählt ist aus der Gruppe, bestehend aus F, Cl, Br, OH, $C_{1-12}$-Alkoxy und $C_{1-12}$-Alkyl;

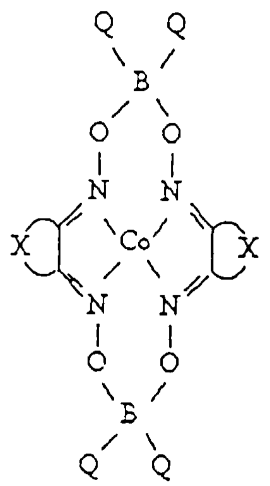

(III)

worin jede X-Gruppe eine zweiwertige Gruppe ist, die mit den beiden Kohlenstoffatomen gebildet wird, an die sie gebunden ist, eine perikondensierte polycyclische Gruppe mit 3 oder mehr carbocyclischen Ringen, in denen der oximhaltige carbocyclische Ring mit 2 oder mehreren anderen Ringen Kohlenstoffatome gemeinsam hat, wobei die polycyclische Gruppe unsubstituiert ist (abgesehen von den Oximgruppen) oder mindestens einen Hydrocarbylsubstituenten aufweist; und worin jede Q-Gruppe unabhängig ausgewählt ist aus der Gruppe, bestehend aus F, Cl, Br, OH, $C_{1-12}$-Alkoxy, Aryloxy, $C_{1-12}$-Alkyl und Aryl; oder zwei Q-Gruppen zusammen genommen an einem oder beiden Boratomen eine -O-(G)-O-Gruppe bilden, worin G eine zweiwertige Aryl- oder eine alicyclische Verknüpfungsgruppe oder eine Alkylen-Verknüpfungsgruppe ist, oder zwei Q-Gruppen zusammengenommen an einem oder beiden Boratomen eine 1,5-Cyclooctandiyl-Verknüpfungsgruppe bereitstellen;

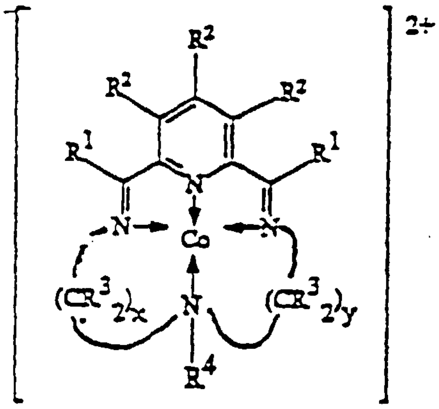

(IV)

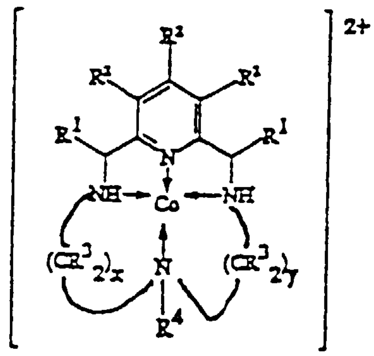

(V)

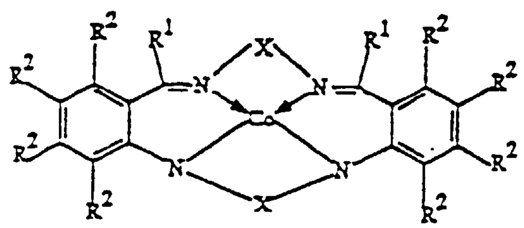

(VI)

worin:

x und y unabhängig 2 bis 5 sind;
jedes $R^1$, $R^2$, $R^3$ und $R^4$ unabhängig ausgewählt ist aus H, $C_1$-$C_{12}$-Alkyl, wahlweise substituiertem Aryl, $OR^5$ wobei $R^5$ $C_1$- bis $C_{12}$-Alkyl oder optional substituiertes Aryl, $CO_2R^5$, $SO_3H$, $C(=O)R^5$, $CO_2H$, $NO_2$, OH, $NR^5_2$, $NH_2$, $NHR^5$, $SR^5$, SH, CN, $SO_3R^5$, Halogen, 2-Furyl und 3-Furyl ist;
jedes X unabhängig ausgewählt ist aus $(SR^2)_n$, $(CR^6{}_2O)_n$, optional substituiertem o-Phenylen und optional substituiertem 1,8-Naphthylen, worin jedes $R^6$ unabhängig ausgewählt ist aus H und $C_1$-bis $C_{12}$-Alkyl, und n 1 bis 10 ist; und
worin die Cobaltchelate der Formeln IV und V eine positive Ladung von 2 aufweisen und mit einem Anion oder Anionen verbunden sind, um die positive Ladung auszugleichen, während dasjenige von Formel VI neutral ist.

**2.** Verfahren nach Anspruch 1, umfassend eine Emulsionspolymerisation.

**3.** Verfahren nach Anspruch 1, umfassend eine Lösungspolymerisation in Wasser oder einer Einphasenmischung aus Wasser und organischem Lösungsmittel.

**4.** Verfahren nach einem der Ansprüche 1 bis 3, in dem das Cobaltchelat-Kettenübertragungsmittel ausgewählt ist

aus mindestens einer Verbindung der Gruppe

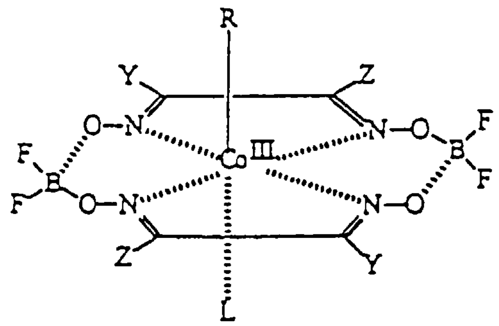

| | |
|---|---|
| $RCo(III)(DPG\text{-}BF_2)_2$ | Y = Z = Ph, R = Alkyl, L= Lewis-Base |
| $RCo(III)(DMG\text{-}BF_2)_2$ | Y = Z = Me, R = Alkyl, L = Lewis-Base |
| $RCo(III)(EMG\text{-}BF_2)_2$ | Y = Me, Z = Et, R = Alkyl, L= Lewis-Base |
| $RCo(III)(DEG\text{-}BF_2)_2$ | Y = Z = Et, R = Alkyl, L = Lewis-Base |
| $RCo(III)(CHG\text{-}BF_2)_2$ | Y + Z = $-(CH_2)_4-$, R = Alkyl, L = Lewis-Base und |
| $RCo(III)(DMG\text{-}BF_2)_2$ | Y = Z = Me, R= Halogen, L = Lewis-Base |

**5.** Verfahren nach Anspruch 4, worin das Cobaltchelat-Kettenübertragungsmittel ein Alkyl-Co(III)-(Dimethylglyoxim-$BF_2)_{2x}$ oder ein Alkyl-Co(III)(diethylglyoxim-$BF_2)_2$ ist.

**6.** Verfahren nach Anspruch 5, wobei das Alkyl Isopropyl ist.

**7.** Cobaltchelat-Kettenübertragungsmittel, ausgewählt aus der Gruppe:

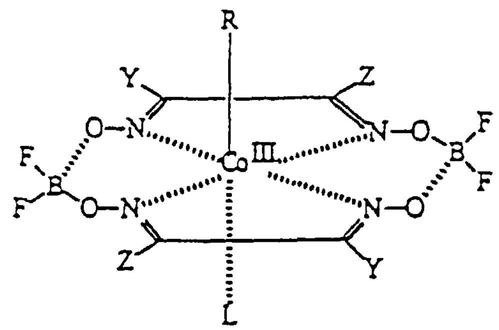

umfassend:

| | |
|---|---|
| $RCo(III)(EMG\text{-}BF_2)_2$ | Y = Me, Z = Et, R = Alkyl, L = Lewis-Base |
| $RCo(III)(DEG\text{-}BF_2)_2$ | Y = Z = Et, R = Alkyl, L = Lewis-Base und |
| $RCo(III)(CHG\text{-}BF_2)_2$ | Y + Z = $-(CH_2)_4-$, R = Alkyl, L = Lewis-Base |

## Revendications

**1.** Procédé pour la polymérisation en solution ou en émulsion dans des milieux aqueux d'au moins un monomère sélectionné parmi le groupe :

(a) un monomère 1,1-disubstitué éthyléniquement insaturé;
(b) un styrène;
(c) un mélange de (a) et (b); et

(d) un mélange d'au moins un de (a) et (b) avec un ou plusieurs autres monomères polymérisables par radicaux libres;

ledit monomère ou mélange de monomères comprenant au moins 50 pour-cent en poids de monomère sélectionné parmi au moins un de (a) et (b);
comprenant la mise en contact des matériaux suivants :

(i) de l'eau ou un mélange d'eau solvant organique en une phase unique,
(ii) au moins un monomère sélectionné parmi (a) à (d),
(iii) un tensioactif facultatif pour une polymérisation en émulsion;
(iv) un initiateur de radicaux libres facultatif soluble dans les milieux;
(v) un agent de transfert de chaîne chélate de cobalt (III) ayant les propriétés suivantes :
(vi) une stabilité à l'hydrolyse, et
(vii) une solubilité dans l'eau et dans la phase organique, avec une solubilité préférentielle dans la phase organique;

à condition que ledit agent de transfert de chaîne ne soit pas un analogue de cobalt (III) des composés de contrôle de poids moléculaire chélate de cobalt (II) représentés par les formules suivantes I, II, III, IV, V et VI, dans lesquelles l'atome de Co est de plus lié de manière covalente à H, un halogénure ou un autre anion, ou un groupement organique dissociable de manière homolytique :

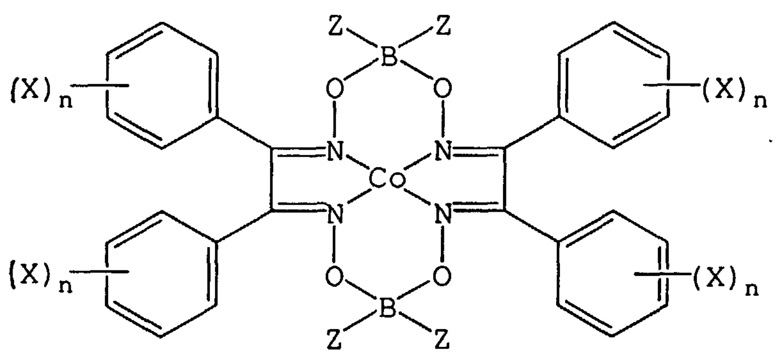

(I)

dans laquelle chaque groupement X, indépendamment dans chaque cycle et dans les différents cycles, est un substituant sélectif parmi le groupe comprenant un alkyle de 1 à 14 atomes de carbone et un cycloalkyle de 6 à 14 atomes de carbone;
n, indépendamment dans chaque cycle, est 0 à 5 à condition que dans au moins un cycle, n soit 1 à 5;
Z, indépendamment sur chaque atome de bore, est sélectionné parmi le groupe comprenant F, Cl, Br, OH, un alcoxy de 1 à 12 atomes de carbone, un aryloxy de 6 à 12 atomes de carbone, un alkyle de 1 à 12 atomes de carbone et un aryle de 6 à 12 atomes de carbone;
ou deux groupements Z pris ensemble fournissent, sur un ou les deux atomes de bore, un groupement -O-(Q)-O- où Q est un aryle divalent ou un groupement de liaison alicyclique ou un groupement de liaison alkylène, ou deux groupements Z pris ensemble sur un ou les deux atomes de bore fournissent un groupement de liaison 1,5-cyclooctanediyle;

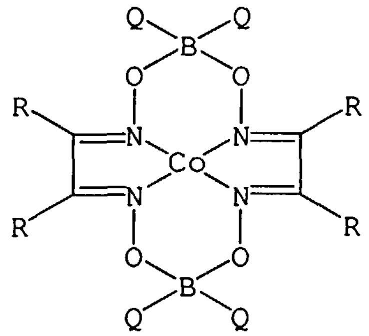

(II)

dans laquelle chaque groupement R est, indépendamment, un groupement monovalent ayant une structure cyclique ou, pris ensemble en tant que deux groupements adjacents, fournit un groupement divalent formant une structure cyclique avec les atomes de carbone adjacents, et dans laquelle, en plus, au moins un des groupements R comprend au moins un hétéroatome sélectionné parmi le groupe comprenant O, N, S, P, un halogène et Si, ledit hétéroatome fournissant un groupement substituant ou une partie d'un groupement substituant sur la structure cyclique, ou un hétéroatome d'un cycle hétérocyclique de la structure cyclique, et dans laquelle chaque groupement Q est indépendamment sélectionné parmi le groupe comprenant F, Cl, Br, OH, un alcoxy en $C_1$-$C_{12}$ et un alkyle en $C_1$-$C_{12}$;

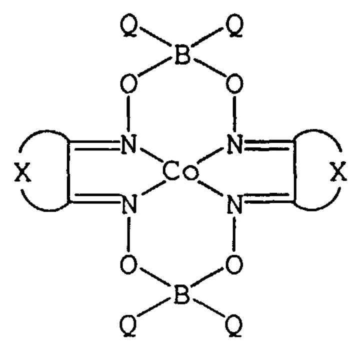

(III)

dans laquelle chaque groupement X est un groupement divalent formant avec les deux atomes de carbone auxquels il est lié, un groupement polycyclique péricondensé ayant 3 cycles carbocycliques ou davantage où le cycle carbocyclique contenant un oxime a des atomes de carbone en commun avec 2 ou plus des autres cycles, ledit groupement polycyclique étant non substitué (sauf les groupements oxime) ou ayant au moins un substituant hydrocarbonyle; et dans laquelle chaque groupement Q est indépendamment sélectionné parmi le groupe comprenant F, Cl, Br, OH, alcoxy en $C_1$-$C_{12}$, aryloxy, alkyle en $C_1$-$C_{12}$ et aryle; ou deux groupements Q pris ensemble fournissent, sur un ou les deux atomes de bore, un groupement -O-(G)-O- où G est un aryle divalent ou un groupement de liaison alicyclique ou un groupement de liaison alkylène; ou deux groupements Q pris ensemble sur un ou les deux atomes de bore fournissent un groupement de liaison 1,5-cyclooctanediyle;

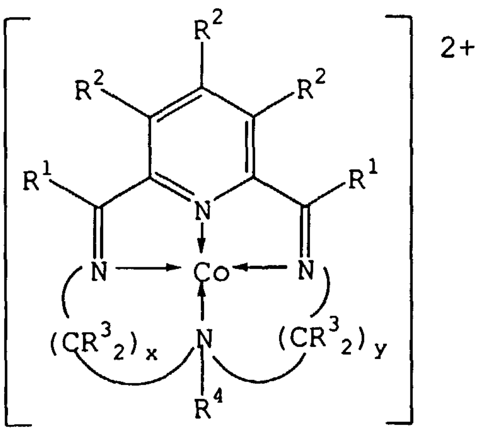

(IV)

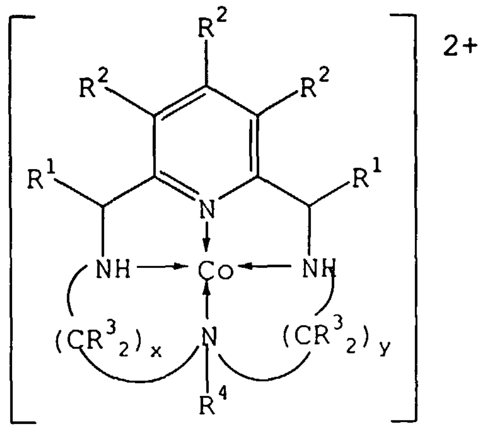

(V)

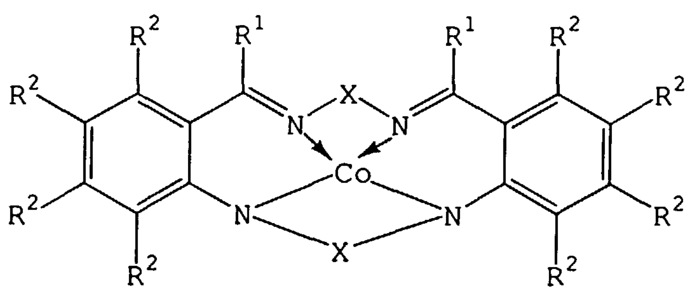

(VI)

dans lesquelles :

x et y sont indépendamment 2 à 5;

chaque $R^1$, $R^2$, $R^3$, et $R^4$ sont indépendamment sélectionnés parmi H, un alkyle en $C_1$-$C_{12}$, un aryle facultativement substitué, $OR^5$ où $R^5$ est un alkyle en $C_1$-$C_{12}$ ou un aryle facultativement substitué, $CO_2R^5$, $SO_3H$, $C(=O)R^5$, $CO_2H$, $NO_2$, OH, $NR^5_2$, $NH_2$, $NHR^5$, $SR^5$, SH, CN, $SO_3R^5$, un halogène, un 2-furyle et un 3-furyle;

chaque X est indépendamment sélectionné parmi $(SR^6_2)_n$, $(CR^6_2O)_n$, un o-phénylène facultativement substitué, et un 1,8-naphtylène facultativement substitué, où chaque $R^6$ est indépendamment sélectionné parmi H et un alkyle en $C_1$-$C_{12}$, et n est 1 à 10; et

dans lesquelles lesdits chélates de cobalt de formules IV et V présentent une charge positive de 2 et sont associés avec un anion ou des anions pour équilibrer la charge positive, alors que la formule VI est neutre.

**2.** Procédé suivant la revendication 1, comprenant une polymérisation en émulsion.

3. Procédé suivant la revendication 1, comprenant une polymérisation en solution dans de l'eau ou un mélange en une phase unique d'eau et d'un solvant organique.

4. Procédé suivant l'une quelconque des revendications 1 à 3, dans lequel l'agent de transfert de chaîne chélate de cobalt est sélectionné parmi au moins un membre du groupe

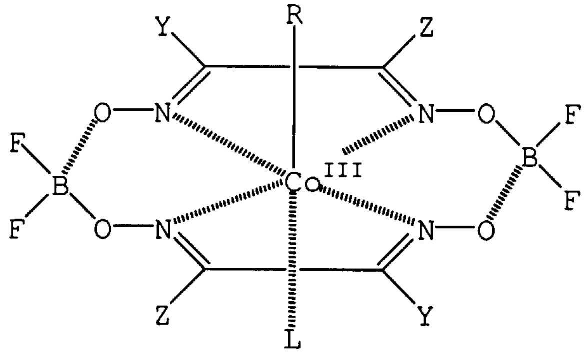

| | |
|---|---|
| $RCo(III)(DPG\text{-}BF_2)_2$ | Y=Z=Ph, R=alkyle, L=base de Lewis |
| $RCo(III)(DMG\text{-}BF_2)_2$ | Y=Z=Me, R=alkyle, L=base de Lewis |
| $RCo(III)(EMG\text{-}BF_2)_2$ | Y=Me, Z=Et, R=alkyle, L=base de Lewis |
| $RCo(III)(DEG\text{-}BF_2)_2$ | Y=Z=Et, R=alkyle, L=base de Lewis |
| $RCo(III)(CHG\text{-}BF_2)_2$ | Y+Z=$-(CH_2)_4-$, R=alkyle, L=base de Lewis et |
| $RCo(III)(DMG\text{-}BF_2)_2$ | Y=Z=Me, R=halogène, L=base de Lewis |

5. Procédé suivant la revendication 4, dans lequel l'agent de transfert de chaîne chélate de cobalt est un alkylCo(III)(diméthylglyoxime-$BF_2)_2$ ou un alkylCo(III)(diéthylglyoxime-$BF_2)_2$.

6. Procédé suivant la revendication 5, dans lequel l'alkyle est un i-propyle.

7. Agent de transfert de chaîne chélate de cobalt sélectionné parmi le groupe :

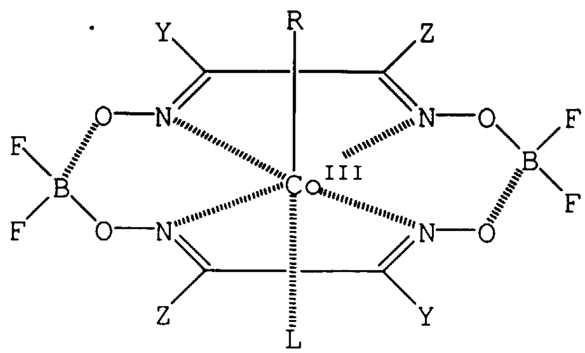

comprenant

| | |
|---|---|
| $RCo(III)(EMG\text{-}BF_2)_2$ | Y=Me, Z=Et, R=alkyle, L=base de Lewis |
| $RCo(III)(DEG\text{-}BF_2)_2$ | Y=Z=Et, R=alkyle, L=base de Lewis et |
| $RCo(III)(CHG\text{-}BF_2)_2$ | Y+Z=$-(CH_2)_4-$, R=alkyle, L=base de Lewis. |